# EUROPÄISCHE PATENTANMELDUNG

(11) **EP 3 761 471 A1**
(43) Veröffentlichungstag der Anmeldung: **06.01.2021**
(21) Anmeldenummer: 19184157.6
(22) Anmeldetag: 03.07.2019
(51) Int. Cl.: H02J 3/28, B60L 53/63, H02J 3/38, H02J 3/48, H02J 3/14

(54) **VERFAHREN ZUR STEUERUNG DER STROMVERSORGUNG MINDESTENS EINES HAUSHALTES SOWIE ELEKTRISCHER LEISTUNGSWÄCHTER**

(71) Anmelder: Hahnen, Sascha, 6934 Sulzberg (AT)
(72) Erfinder: Hahnen, Sascha, 6934 Sulzberg (AT)
(74) Vertreter: Engelhardt, Volker

(57) **Zusammenfassung**

Bei einem Verfahren zur Steuerung der Stromversorgung mindestens eines Haushaltes (1, 2, 3), der oder die von einem externen Stromversorger (4) mit einer limitierten elektrischen Leistung gespeist ist bzw. sind, soll der jeweilige Haushalt (1, 2, 3) mit einer ausreichenden elektrischen Leistung für die vorhandenen elektrischen Verbraucher in dem jeweiligen Haushalt versorgt werden und mit einem elektrisch betriebenen Leistungswächter (11) verbunden sein.

Dies ist durch folgende Verfahrensschritte gelöst, nämlich
- Messen der vom Stromversorger zur Verfügung gestellten elektrischen Leistung mit Hilfe eines elektrischen Leistungswächters (11) innerhalb eines vorgegebenen Zeitintervalls und Wiederholen der Messung nach Ablauf des Zeitintervalls,
- Messen des Energieverbrauches der im Haushalt (1, 2 ...n) vorhandenen elektrischen Verbraucher, und/oder
- Einspeisen von zusätzlicher Energie in Form von elektrischer Leistung an den elektrischen Leistungswächter (11), durch eine dem Haushalt (1) zugeordnete Energieumwandlungs- Einrichtung (12), beispielsweise Fotovoltaikanlage und/oder Windkraftanlage, und/oder Energiespeicher und/oder Generator,
- Errechnen der Differenz zwischen dem vom Energieversorger zur Verfügung gestellten elektrischen Leistung und des Leistungsverbrauches der elektrischen Verbraucher des Haushalts (1) durch den elektrischen Leistungswächter (11) und/oder der von der externen Energieumwandlungs-Einrichtung (12) gelieferten elektrischen Leistung, und
- Abgabe der zusätzlichen elektrischen Leistung durch den elektrischen Leistungswächter (11) an ein weiteres elektrisches Gerät (13), insbesondere an ein Elektroauto, Elektrofahrrad und/oder Elektroroller, wobei die abgegebene elektrische Leistung unterhalb eines an dem elektrischen Leistungswächter (11) einstellbaren Grenzwertes liegt.

## Beschreibung

Die Erfindung bezieht sich auf ein Verfahren zur Steuerung der Stromversorgung mindestens eines Haushaltes, der oder die von einem externen Stromversorger mit einer limitierten elektrischen Leistung gespeist ist bzw. sind sowie auf einen elektrisch betriebenen Leistungswächter nach dem Oberbegriff des Patentanspruchs 5 zur Durchführung der Verfahrensschritte.

Seit Jahrzehnten werden Haushalte von einem Stromversorger mit elektrischer Leistung für die jeweils im Haushalt vorgesehen elektrischen Verbraucher versorgt. Üblicherweise liefert heutzutage ein Stromversorger eine maximale elektrische Leistung von 12 KW an einen Haushalt. Mit dieser maximal zur Verfügung stehenden elektrischen Leistung können die elektrischen Verbraucher in einem Haushalt ohne weiteres betrieben werden. Bei den elektrischen Verbrauchern handelt es sich beispielsweise um Kühlschränke, Waschmaschinen, Fernsehgeräte und dergleichen mehr. Bei Mehrfamilienhäusern kann der maximal zur Verfügung stehende elektrische Strom erhöht sein.

Allerdings besteht unabhängig von der Anzahl und der erforderlichen elektrischen Leistung der Verbraucher das Problem, dass der jeweilige Stromversorger eine maximale elektrische Leistung vorgibt. Sobald diese elektrische Leistung nicht mehr ausreicht, hat der jeweilige Inhaber eines Haushaltes die rechtliche und technische Verantwortung für mehr elektrische Leistung, beispielsweise durch eine oder mehrere zusätzliche Leitungen, zu sorgen. Wenn nämlich die vorhandene elektrische Leitung überlastet ist, kann dies zu Störungen im Stromnetz oder zu Beschädigungen von benachbarten Stromverteilern führen.

Im Zuge der Umstellung des Energieverbrauches von nicht-erneuerbaren Energieträgern wie bspw. Erdöl, Kohle oder Erdgas, auf erneuerbare Energieträger, insbesondere auf elektrische Leistung, die aus Fotovoltaikanlagen oder Windräder umgewandelt sind, und der Umrüstung von Fahrzeugen, die von einem Verbrennungsmotor zu einem elektrischen Antrieb in naher Zukunft verändert werden, ist es notwendig, zusätzliche elektrische Leitungen an die jeweiligen Haushalte mit einem oder mehrerer solcher elektrischer Fahrzeuge anzubinden. Solche Umrüstungsmaßnahmen sind jedoch oftmals äußerst kostenintensiv.

Wenn demnach die bestehende elektrische Leitung mit einer maximalen elektrischen Leistung auch für zusätzliche elektrische Verbraucher, beispielsweise Elektroautos, Elektrofahrräder, Elektroroller oder dergleichen, benutzt werden, dann ist es für jeden Benutzer solcher elektrisch betriebenen Fortbewegungsmittel zwingend erforderlich, dafür Sorge zu tragen, dass die vorhandene elektrische Leistung, die von dem jeweiligen Stromversorgung angeboten ist, nicht während des Ladevorgangs der zusätzlichen elektrischen Geräte überlastet ist, um entsprechende Beschädigungen im Stromnetz oder Störungen an benachbarten Stromverteilern oder Wohnungen zu vermeiden.

Es ist zudem bislang bekannt, vorhandene elektrische Geräte, insbesondere Elektroautos, zu Hause über einen sogenannten vom jeweiligen Fahrzeughersteller angebotenen Stromverteiler aufzuladen. Dabei hängt die Ladegeschwindigkeit von dem im jeweiligen Elektrofahrzeug installierten Ladegerät ab, die derzeit eine Ladegeschwindigkeit von 3 bis 20 kW/h besitzen. Je höher jedoch die vorhandene Ladegeschwindigkeit eines angeschlossenen Elektrofahrzeuges ist, desto geringer ist die für den jeweiligen Haushalt zur Verfügung stehende elektrische Leistung. Wenn demnach gleichzeitig mehrere elektrische Verbraucher in dem Haushalt betrieben werden und das Elektrofahrzeug mit der maximalen Ladegeschwindigkeit aufgeladen ist, dann besteht die erhebliche Gefahr, dass die von dem jeweiligen Stromversorger angebotene unbegrenzte maximale elektrische Leistung überstiegen ist, wodurch sich entsprechende Beschädigungen oder Störungen ergeben.

Zudem besteht die gesellschaftliche Tendenz, mehr als ein Elektrofahrzeug in einem Haushalt zu besitzen, die zeitgleich aufzuladen sind, wodurch die Gefahr des Stromnetzüberlastung weiter höht ist.

Es ist daher Aufgabe der Erfindung, ein Verfahren sowie einen elektrisch betriebenen Leistungswächter der eingangs genannten Gattungen zur Verfügung zu stellen, durch die der jeweilige Haushalt mit einer ausreichenden elektrischen Leistung für die vorhandenen elektrischen Verbraucher in dem Haushalt versorgt ist und gleichzeitig eine Überlastung der von dem Stromversorger zur Verfügung gestellten elektrischen Leistung nicht eintritt und zudem sollen möglicherweise vorhandene eigene Energieumwandlungs-Einrichtungen, durch die zusätzliche elektrische Leistungen unabhängig von dem Stromversorger erzeugt sind, sowohl dem Leistungswächter für die Aufladung von zusätzlichen elektrischen Geräten, insbesondere Elektrofahrzeugen, zur Verfügung stehen. Darüber hinaus soll durch den Leistungswächter eine intelligente Verbindung zwischen dem jeweiligen Haushalt und dem Stromversorger beschaffen sein, durch die der Stromversorger eine Zugriffsmöglichkeit auf vorhandene Speicherkapazitäten der zusätzlichen elektrischen Geräte hat, um diese in das Stromnetz einzuspeisen.

Diese Aufgaben sind erfindungsgemäß durch die Merkmale der kennzeichnenden Teile der Patentansprüche 1 und 5 gelöst.

Weitere vorteilhafte Weiterbildungen der Erfindung ergeben sich aus den Unteransprüchen.

Um die Durchführung der Verfahrensschritte zu gewährleisten, sind die nachfolgenden Verfahrensschritte erforderlich, nämlich,
Messen der vom Stromversorger zur Verfügung gestellten elektrischen Leistung mit Hilfe eines elektrischen Leistungswächters innerhalb eines vorgegebenen Zeitintervalls und Wiederholen der Messung nach Ablauf des Zeitintervalls,
Messen des Energieverbrauches der im Haushalt (1, 2 ...n) vorhandenen elektrischen Verbraucher, und/oder
Einspeisen von zusätzlicher Energie in Form von elektrischer Leistung an den elektrischen Leistungswächter, durch eine dem Haushalt zugeordnete Energieumwandlungs- Einrichtung, beispielsweise Fotovoltaikanlage und/oder Windkraftanlage, und/oder Energiespeicher und/oder Generator,
Errechnen der Differenz zwischen dem vom Energieversorger zur Verfügung gestellten elektrischen Leistung und des Leistungsverbrauches der elektrischen Verbraucher des Haushalts durch den elektrischen Leistungswächter und/oder der von der externen Energieumwandlungs-Einrichtung gelieferten elektrischen Leistung, und
Abgabe der zusätzlichen elektrischen Leistung durch den elektrischen Leistungswächter an ein weiteres elektrisches Gerät, insbesondere an ein Elektroauto, Elektrofahrrad und/oder Elektroroller,
wobei die abgegebene elektrische Leistung unterhalb eines an dem elektrischen Leistungswächter einstellbaren Grenzwertes liegt, wodurch erreicht ist, dass der permanente elektrische Verbrauch eines Haushaltes innerhalb eines vorgegebenen Zeitintervalls erfasst ist und mit dem elektrischen Verbrauch eines zusätzlichen elektrischen Gerätes, beispielsweise eines Elektrofahrzeuges, in eine mathematische Beziehung gesetzt werden kann, um derart eine Berechnung für die Regulierung der auf Ladegeschwindigkeit des zusätzlich angeschlossenen elektrischen Gerätes durch den Leistungswächter zu ermitteln und an die Vorgaben des Stromversorgers hinsichtlich Obergrenze der elektrischen Leistung anzupassen.

Da der Leistungswächter sowohl die zur Verfügung stehende maximale elektrische Leistung erfasst und gleichzeitig den tatsächlichen elektrischen Verbrauch innerhalb des Haushaltes misst und gegebenenfalls zusätzlich eingespeiste elektrische Leistung durch eine Energieumwandlungs-Einrichtung, beispielsweise Photovoltaikanlage, Windkrafteinrichtung, Speicher oder Generator, ermittelt, kann eine permanente elektrische Versorgung der vorhandenen elektrischen Verbraucher sowie zusätzliche elektrischer Geräte, beispielsweise Elektrofahrzeuge, erreicht sein, ohne dass der Grenzwert der vorhandenen elektrischen Leistung des Stromversorgers überschritten ist.

Zudem hat der jeweilige Stromversorger in Absprache dem jeweiligen Betreiber des Leistungswächters eine Eingriffsmöglichkeit auf die vorhandene gespeicherte elektrische Leistung in den zusätzlichen elektrischen Geräten. Bekanntlich besitzt ein Elektrofahrzeug einen Akkumulator von beispielsweise 60 kW Ladekapazität, auf die der Stromversorger im Bedarfsfalle zurückgreifen kann. Somit können eine Vielzahl von elektrischen Geräten, die einen Akkumulator für deren Betrieb haben, als Speicherquelle benutzt werden. Der Stromversorger kann vertraglich dazu verpflichtet sein, lediglich eine bestimmte Menge der elektrischen Leistung aus den jeweiligen elektrischen Geräten abzuziehen, um zu gewährleisten, dass die elektrischen Geräte permanent ausreichend aufgeladen und somit betriebsbereit bzw. fahrbereit sind.

Es ist besonders vorteilhaft, wenn der Leistungswächter über ein Schaltfeld manuell programmierbar ist. Denn dadurch kann individuell ein Grenzwert eingestellt werden, der geringer oder maximal gleich groß bemessen ist wie die vorhandene elektrische Leistung, den der jeweilige Stromversorger für den entsprechenden Haushalt anbietet. Folglich ist eine Überlastung der vom Stromversorger angebotenen Leistung verhindert und lediglich die Ladegeschwindigkeit von zusätzlichen elektrischen Geräten ist reduziert. Die in dem Haushalt zu betreibenden elektrischen Verbraucher sind von der Regulierung ausgeschlossen, so dass diese störungsfrei und dauerhaft mit ausreichender elektrischer Leistung versorgt sind.

Sobald eine externe Energieumwandlungs-Einrichtung in Form einer Photovoltaikanlage, eines Windrades, eines Speichers oder eines andersartig ausgestalteten Generators den jeweiligen Haushalt mit zusätzlicher elektrischer Leistung versorgt, kann diese in die Berechnung der zur Verfügung stehenden elektrischen Leistung durch den Leistungswächter mitberücksichtigt sein. Es ist ohne weiteres denkbar, den Leistungswächter derart zu programmieren, dass zusätzlich an diesen angeschlossene externe elektrische Geräte ausschließlich von den mit erneuerbarer energiebetriebenen Stromquellen aufgeladen sind und dass bei entsprechender erfolgter Aufladung der elektrischen Geräte diese zusätzliche elektrische Leistung in das Stromnetz des jeweiligen Stromversorger eingespeist ist.

Zudem kann der erfindungsgemäße Leistungswächter derart intelligent mit dem Stromnetz des jeweiligen Stromversorger gekoppelt sein, dass die bereits gespeicherte elektrische Leistung in den Akkumulatoren der elektrischen Geräte von dem Stromversorger in das Stromnetz zurückgeführt werden können. Dies ist besonders dann von Interesse, wenn entsprechende Leistungsspitzen im Netz vorhanden sind. Folglich können eine Vielzahl von an das Stromnetz angeschlossene Akkumulatoren von elektrischen Geräten, beispielsweise Elektroautos, als individuelle Speichermöglichkeit von elektrischer Energie vorgesehen und genutzt werden.

In der Zeichnung ist das erfindungsgemäße Verfahren sowie der für die Durchführung des Verfahrens erforderliche erfindungsgemäße Leistungswächter schematisch abgebildet, die nachfolgend näher erläutert sind. Im Einzelnen zeigt:
- Figur 1: den Verfahrensablauf für den Betrieb von drei Haushalten mit einer Vielzahl von elektrischen Verbrauchern, wobei an den ersten Haushalt sowohl ein zusätzliches elektrisches Gerät, beispielsweise ein Elektrofahrzeug, und eine externe Energieumwandlungs-Einrichtung angeschlossen ist, mit einem Leistungswächter und dessen Vernetzung mit dem Stromnetz des jeweiligen Stromversorger und dem Haushalt und
- Figur 2: der Leistungswächter innerhalb des Stromnetzes des ersten Haushaltes gemäß Figur 1.

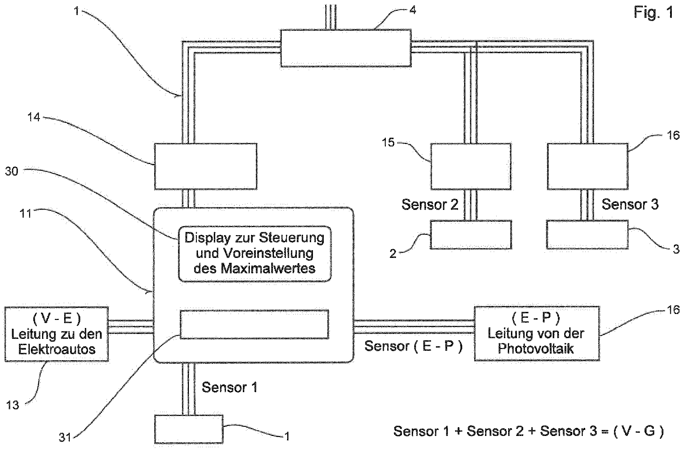

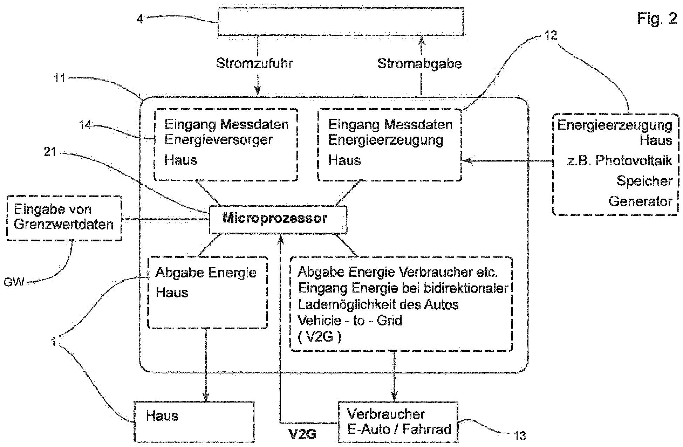

Aus den Figuren 1 und 2 ist ersichtlich, dass drei Haushalte 1, 2, 3 von einem Stromversorger 4 mit elektrischer Leistung versorgt sind. Jeder der drei Haushalte 1, 2 und 3 weist eine Vielzahl von elektrischen Verbrauchern, beispielsweise Leuchten, Kühlschränke, Fernsehgeräte, Waschmaschinen und dergleichen auf, die permanent oder nach Bedarf mit Strom zu betreiben sind. Die vom Energieversorger 4 zur Verfügung gestellten elektrischen Leistungen sind begrenzt und betragen üblicherweise 12 kWh. Ein Haushalt mit einer Vielzahl von elektrischen Verbrauchern benötigt etwa 2 bis 4 kWh elektrischer Leistung für deren Betrieb der erforderlichen elektrischen Verbraucher. Folglich ist die vorhandene maximale elektrische Leistung nicht überschritten.

Der Haushalt 1 benötigt jedoch nach dem Kauf eines externen elektrischen Gerätes 13, beispielsweise eines Elektrofahrzeuges, zusätzliche elektrische Leistung, um das elektrische Gerät 13 aufzuladen. Um zu verhindern, dass durch die zusätzliche elektrische Leistung des elektrischen Gerätes 13 eine Überlastung der vorhandenen maximalen elektrischen Leistung des Energieversorgers 4 eintritt, ist ein Leistungswächter 11 in den Stromkreis des Haushaltes 1 angeschlossen.

Der Leistungswächter 11 weist ein Display 30 und ein Schaltfeld 31 auf, um beispielsweise einen Grenzwert GW einstellen zu können, der unterhalb oder maximal gleich groß bemessen ist wie der maximale elektrische Leistungswerte des Stromversorger 4. Somit ist die von dem elektrischen Leistungswächter 11 abgegebene elektrische Leistung an das elektrische Gerät 13 auf diesen Grenzwert GW begrenzt und die maximale elektrische Leistung des Stromversorger 4 ist nicht überschritten.

Wenn nunmehr durch eine oder mehrere externe Energieumwandlungs-Einrichtung 12 zusätzliche elektrische Leistung in den Haushalt 1 eingespeist werden kann, erhöht sich die zur Verfügung stehende elektrische Leistung. Diese zusätzliche elektrische Leistung wird vom Leistungswächter 11 erfasst. Zudem sind dem Leistungswächter 11 eine Vielzahl von Stromzählern 14 bis 17 zugeordnet, durch die der elektrische Verbrauch der in dem Haushalt 1 vorhandenen elektrischen Verbraucher erfasst ist und die von dem elektrischen Gerät 13 abgezogene elektrische Leistung für die jeweilige Aufladung der Akkumulatoren. Zudem erfasst der Leistungswächter 11 die tatsächliche maximale elektrische Leistung des Stromversorger 4. Sollte die benötigte elektrische Leistung der elektrischen Verbraucher innerhalb des Haushaltes 1 und die elektrische Leistung der angeschlossenen elektrischen Geräte 13 diesen Grenzwert GW, also die maximale zur Verfügung stehende elektrische Leistung des Stromversorgers 4 übersteigen, reduziert der Leistungswächter 11 die an die elektrischen Geräte 13 abgegebene elektrische Leistung auf einen Wert, derart, dass die eingestellten Grenzwerte GW nicht überschritten sind.

Wenn der Haushalt 1 eine zusätzliche externe Energieumwandlungs-Einrichtung 12, beispielsweise in Form einer Photovoltaikanlage, eines Windkraftrades, eines Energiespeichers oder eines Generators besitzt, durch die zusätzliche elektrische Leistung generierbar ist, dann wird über den entsprechenden Messsensor 10 diese zusätzliche elektrische Leistung an den Leistungswächter 11 weitergeleitet und durch diesen in die Berechnung der Abgabe der elektrischen Leistung an die elektrischen Geräte 13 berücksichtigt. Zudem kann der Leistungswächter 11 derart programmiert sein, dass die angeschlossenen externen elektrischen Geräte 13 ausschließlich durch die Energiequellen aufgeladen ist, die auf erneuerbare Energieressourcen basieren und die demnach durch die zusätzliche Energieumwandlungs-Einrichtung 12 zu generieren sind.

Sollten die in dem Haushalt 1 angeschlossenen elektrischen Verbraucher und das externe elektrische Gerät 13 weniger elektrische Leistung benötigen als von der externen Energieumwandlungs-Einrichtung 12 zur Verfügung gestellt ist, dann schaltet der Leistungswächter 11 die zusätzliche elektrische Leistung der Umwandlungseinrichtung 12 frei, so dass diese in das Stromnetz des jeweiligen Energieversorgers 4 eingespeist ist.

Darüber hinaus kann eine intelligente Vernetzung des Leistungswächters 11 mit dem jeweiligen Stromversorger 4 eingestellt bzw. programmiert sein, durch die auf die gespeicherte Energie in den Akkumulatoren der elektrischen Geräte 13 zurückgegriffen werden kann. Wenn nämlich in dem Stromnetz des Energieversorger 4 Spannungsspitzen auftreten, also zusätzliche elektrische Energie benötigt ist, kann der Energieversorger 4 die gespeicherte Leistung in den Akkumulatoren der elektrischen Geräte 13 teilweise abgreifen und in das Stromnetz einspeisen. In welcher Größenordnung die Leistungsabnahme aus den Akkumulatoren der elektrischen Geräte 13 erfolgt, kann individuell zwischen dem Betreiber des Leistungswächter 11 und dem jeweiligen Stromversorger 4 abgeschlossen sein.

Eine solche Betriebsweise ist unter der Definition "vehicle to grid" (V2G) bekannt. Für den komfortablen Betrieb des Leistungswächters 11 kann ein Microprozessor 31 vorgesehen sein, der entsprechende Schalt- und Rechenfunktionen besitzt, um die erforderlichen Berechnungsschritte und Stromversorgungsmaßnahmen durchzuführen.

## Patentansprüche

1. Verfahren zur Steuerung der Stromversorgung mindestens eines Haushaltes (1, 2, 3), der oder die von einem externen Stromversorger (4) mit einer limitierten elektrischen Leistung gespeist ist bzw. sind,
**gekennzeichnet durch** die Verfahrensschritte:
- Messen der vom Stromversorger zur Verfügung gestellten elektrischen Leistung mit Hilfe eines elektrischen Leistungswächters (11) innerhalb eines vorgegebenen Zeitintervalls und Wiederholen der Messung nach Ablauf des Zeitintervalls,
- Messen des Energieverbrauches der im Haushalt (1, 2 ...n) vorhandenen elektrischen Verbraucher, und/oder
- Einspeisen von zusätzlicher Energie in Form von elektrischer Leistung an den elektrischen Leistungswächter (11), durch eine dem Haushalt (1) zugeordnete Energieumwandlungs- Einrichtung (12), beispielsweise Fotovoltaikanlage und/oder Windkraftanlage, und/oder Energiespeicher und/oder Generator,
- Errechnen der Differenz zwischen dem vom Energieversorger zur Verfügung gestellten elektrischen Leistung und des Leistungsverbrauches der elektrischen Verbraucher des Haushalts (1) durch den elektrischen Leistungswächter (11) und/oder der von der externen Energieumwandlungs-Einrichtung (12) gelieferten elektrischen Leistung, und
- Abgabe der zusätzlichen elektrischen Leistung durch den elektrischen Leistungswächter (11) an ein weiteres elektrisches Gerät (13), insbesondere an ein Elektroauto, Elektrofahrrad und/oder Elektroroller, wobei die abgegebene elektrische Leistung unterhalb eines an dem elektrischen Leistungswächter (11) einstellbaren Grenzwertes liegt.

2. Verfahren nach Anspruch 1,
**dadurch gekennzeichnet,**
**dass** der vorgegebene Grenzwert (GW) zur Abgabe der elektrischen Leistung maximal der vom Energieversorger zur Verfügung gestellten elektrischen Leistung entspricht oder dass die von der externen Energieumwandlungs-Einrichtung (12) zur Verfügung gestellte elektrische Leistung unmittelbar vom elektrischen Leistungswächter (11) an die an diesen angeschlossenen elektrischen Geräte (13) abgegeben bzw. weitergeleitet ist.

3. Verfahren nach Anspruch 1 oder 2,
**dadurch gekennzeichnet,**
**dass** die erhaltene Leistung jedes angeschlossenen Haushaltes (1, 2, 3) und die verbrauchte elektrische Leistung mithilfe von Stromzählern (14, 15, 16) ermittelt ist, die elektrisch mit dem elektrischen Leistungswächters (11) verbunden sind.

4. Verfahren nach einem der vorgenannten Ansprüche,
**dadurch gekennzeichnet,**
**dass** der Energieversorger eine Zugriffsmöglichkeit auf den Leistungswächter (11), insbesondere durch eingespeiste Steuersignale ausübt, derart, dass die elektrischen Geräte (12), die an den Leistungswächter (11) angeschlossen sind, eine vorgegebene und gespeicherte elektrische Leistung an den Energieversorger abgeben.

5. Elektrisch betriebener Leistungswächter (11), der insbesondere für die vorgenannten Verfahrensansprüche geeignet ist, bestehend aus
- einer Recheneinheit (21) und mehreren der erhaltenen elektrischen Leistung und der verbrauchten elektrischen Leistung eines Haushaltes (1, 2, 3) zugeordnete Messsensoren (14, 15, 16), insbesondere Stromzähler,
- aus mindestens einem an dem Leistungswächter (11) elektrische angeschlossenen externen elektrischen Geräte (13), insbesondere Elektroautos, Elektrofahrräder oder Elektroroller, deren Energieeinspeisung geeignet ist, und
- aus einem manuell bedienbaren Schaltfeld (31), durch das die Recheneinheit (21) von einem Benutzer programmierbar und/oder mit vorgeben Grenzwerten (GW) einstellbar ist,
**dadurch gekennzeichnet,**
**dass** durch den elektrischen Leistungswächter (11) ein permanenter und dynamischer Abgleich zwischen der von dem Energieversorger (4) zur Verfügung gestellten elektrischen Leistung und des von den elektrischen Verbrauchern des Haushaltes aufgenommenen Leistung ermittelt ist und der errechnete Differenzbetrag der elektrischen Leistung an die externen elektrischen Geräte (13) abgegeben ist, wobei die vom Energieversorger maximal zur Verfügung gestellte elektrische Leistung den oberen Grenzwert (GW) für die Stromabgabe an die elektrischen Geräte (13) durch eine an dem Leistungswächter (11) vorzunehmende Grenzwert-Einstellung eingehalten ist.

6. Vorrichtung nach Anspruch 5,
**dadurch gekennzeichnet,**
**dass** in dem elektrischen Leistungswächter (11) mindestens ein Mikroprozessor oder eine sonstige geeignete Recheneinrichtung (21) vorhanden ist, die elektrisch mit den Stromzählern (14, 15, 16) verbunden ist und durch die die Differenz zwischen den erhaltenen Messwerten der Stromzählers (14, 15, 16) hinsichtlich erhaltener Leistung und abgegebener Leistung an die elektrischen Verbraucher des Haushaltes (1) errechnet bzw. ausgewertet ist und dass in Abhängigkeit des permanent bzw. dynamisch ermittelten Differenzbetrages die an die elektrischen Geräte (13) abgegebene elektrische Leistung festgelegt ist.
